(19) Europäisches Patentamt
European Patent Office
Office européen des brevets

(11) EP 2 828 916 B1

(12) EUROPÄISCHE PATENTSCHRIFT

(45) Veröffentlichungstag und Bekanntmachung des Hinweises auf die Patenterteilung:
**10.02.2016 Patentblatt 2016/06**

(51) Int Cl.:
**H01M 8/04** (2006.01)

(21) Anmeldenummer: **12769928.8**

(22) Anmeldetag: **25.09.2012**

(86) Internationale Anmeldenummer:
**PCT/EP2012/004008**

(87) Internationale Veröffentlichungsnummer:
**WO 2013/139356 (26.09.2013 Gazette 2013/39)**

(54) **VERFAHREN ZUM ÜBERPRÜFEN DER GAS-DICHTHEIT EINES BRENNSTOFFZELLENSYSTEMS**

PROCESS FOR CONTROLLING THE GAS-TIGHNESS OF A FUEL CELL SYSTEM

PROCÉDÉ POUR LE CONTRÔLE D'ÉTANCHÉITÉ DE GAZ D'UN SYSTÈME DE PILES À COMBUSTIBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2012 DE 102012005692**

(43) Veröffentlichungstag der Anmeldung:
**28.01.2015 Patentblatt 2015/05**

(73) Patentinhaber: **Audi AG**
**85045 Ingolstadt (DE)**

(72) Erfinder: **VAN DOORN, Rene**
**74182 Obersulm-Willsbach (DE)**

(74) Vertreter: **Brandt, Kai**
**Audi AG**
**Patentabteilung I/EZ-1**
**85045 Ingolstadt (DE)**

(56) Entgegenhaltungen:
DE-A1-102006 025 125    DE-A1-102007 060 712
DE-T5-112005 001 818    US-A1- 2009 142 637

**Beschreibung**

Die Erfindung betrifft ein Verfahren zum Überprüfen einer Dichtheit eines Brennstoffzellensystems. Weiterhin betrifft die Erfindung eine Anordnung zum Überprüfen einer Dichtheit eines Brennstoffzellensystems.

Ein mit Wasserstoffgas ($H_2$) betriebenes Brennstoffzellensystem weist neben einer Brennstoffzelle einen oder mehrere Wasserstoffspeicher auf. Derartige Wasserstoffspeicher können, bspw. bei einem Einsatz für ein Kraftfahrzeug, als Zylinder ausgebildet sein, in denen der Wasserstoff unter einem erhöhten Druck von ca. 700 bar gespeichert ist. Sofern in dem Kraftfahrzeug mehrere derartige Wasserstoffspeicher angeordnet sind, kann eine Reichweite des Kraftfahrzeugs entsprechend ausgelegt werden.

Da gasförmiger Wasserstoff geruchsneutral ist und mit Sauerstoff aus der Luft in einem weiten Zündbereich auch bei geringer Zündenergie exotherm reagiert, können für ein Brennstoffzellensystem zum Nachweis von austretendem Wasserstoff Wasserstoffsensoren eingesetzt werden. Abgesehen von Kosten, die durch den Einsatz derartiger Wasserstoffsensoren verursacht werden, weisen diese zudem eine erhebliche Fehlerquote auf. Außerdem altern Wasserstoffsensoren relativ schnell und sind in der Regel auch für Wasserdampf sensibel. Mit einem Wasserstoffsensor kann nur jener Bereich des Brennstoffzellensystems, dem der Wasserstoffsensor zugeordnet ist, überwacht werden, wobei stets zu berücksichtigen ist, dass noch weitere Bereiche existieren, in denen keine Überwachung durchgeführt wird.

Die Druckschrift DE 10 2006 025 125 A1 beschreibt ein Verfahren zum Detektieren undichter Stellen in einem Brennstoffzellensystem, das einen Wasserstoffspeichertank, ein Hauptsperrventil und ein Nebensperrventil in einer Zufuhrleitung umfasst. Beim Abschalten wird das Hauptsperrventil geschlossen, wobei die Brennstoffzellen temporär in Betrieb gelassen werden. Weiterhin wird der Druck in der Zufuhrleitung zwischen den Ventilen gemessen. Wenn der gemessene Druck einen vorbestimmten Abschaltdruck erreicht hat, wird das Nebensperrventil geschlossen. Bei dem nächsten Systemstart wird der Druck gemessen, bevor die Sperrventile geöffnet werden, und der gemessene Druck wird mit dem gespeicherten Druck verglichen. Wenn ein Wert der gegenwärtigen Druckmessung geringer als ein Wert der gespeicherten Druckmessung ist, ist dies ein Hinweis dafür, dass die Zufuhrleitung zwischen den Sperrventilen undichte Stellen besitzt. Wenn der gemessene Druck höher als der gespeicherte Druck ist, ist es ein Hinweis dafür, dass das Primärventil undichte Stellen besitzt.

Eine Gasleckerfassungsvorrichtung für ein Brennstoffzellensystem ist aus der Druckschrift DE 11 2005 001 818 T5 bekannt. Das Brennstoffzellensystem umfasst dabei eine Brennstoffzelle, eine Brennstoffgaszuführungsquelle, einen Zuführungsdurchgang für das Brennstoffgas, einen Entladedurchgang zum Entladen des Brennstoffgases aus der Brennstoffzelle und ein in dem Entladedurchgang angeordnetes Entleerungsventil zum Anpassen einer durch die Brennstoffzelle entladenen Brennstoffgasmenge. Die Gasleckerfassungsvorrichtung umfasst einen in dem Zuführungsdurchgang angeordneten Zuführungsmengendetektor zur Erfassung einer Brennstoffgaszuführungsmenge, wobei der Zuführungsdurchgang einen ersten Durchgang umfasst, der stromab des Zuführungsmengendetektors angeordnet ist, wobei die Brennstoffzelle einen zweiten Durchgang umfasst, durch den das Brennstoffgas strömt. Der Entladedurchgang umfasst einen dritten Durchgang, der stromauf des Entleerungsventils angeordnet ist. Außerdem umfasst die Gasleckerfassungsvorrichtung eine Verbrauchsmengenberechnungseinrichtung zur Berechnung einer durch die Brennstoffzelle verbrauchten Brennstoffgasmenge, einen Druckdetektor zum Erfassen eines Drucks des Brennstoffgases in einem Leckerfassungsdurchgang einschließlich der drei Durchgänge, eine Änderungsmengenberechnungseinrichtung zum Bestimmen einer Änderung des Drucks und zum Berechnen einer Änderung in der Brennstoffgasmenge in dem Gasleckerfassungsdurchgang infolge der Änderung des Drucks des Brennstoffgases und eine Differenzmengenberechnungseinrichtung zur Berechnung einer Differenz zwischen der erfassten Menge an zugeführtem Brennstoffgas und einer Summe der Menge des verbrauchten Brennstoffgases sowie der Änderung der Brennstoffgasmenge in dem Gasleckerfassungsdurchgang.

Ein Diagnoseverfahren zum Detektieren von Komponentenstörungen in einem Brennstoffzellen-Anodensubsystem ist aus der Druckschrift DE 10 2007 060 712 A1 bekannt. Dabei wird eine Brennstoffströmung durch Injektoren geschätzt und mit einem Modell, das auf Systemparametern beruht, verglichen. Ein beobachterbasiertes Modell wird zum Ermitteln eines Restwerts der Differenz zwischen der Wasserstoffzufuhr und dem verbrauchten Wasserstoff verwendet, wobei der Restwert mit einem Grenzwertbereich verglichen wird.

Vor diesem Hintergrund ist erstrebenswert, Wasserstoffsensoren aus einem Brennstoffzellensystem zu eliminieren, ohne jedoch die Sicherheit des Brennstoffzellensystems zu reduzieren.

Die Erfindung betrifft ein Verfahren zum Überprüfen einer Dichtheit eines Brennstoffzellensystems, das eine Brennstoffzelle und mindestens einen Behälter zum Speichern von Wasserstoffgas aufweist. Der mindestens eine Behälter ist über eine Leitung, entlang welcher zumindest ein Drucksensor angeordnet ist, mit der Brennstoffzelle verbunden. Zum Durchführen des Verfahrens wird mit dem zumindest einen Drucksensor ein Druck des zu der Anode der Brennstoffzelle strömenden Wasserstoffgases in dieser Leitung gemessen und über eine Menge-Druck-Beziehung die Menge des Wasserstoffgases vor der Brennstoffzelle bzw. des zu der Brennstoffzelle strömenden gasförmigen Wasserstoffs berechnet. Außerdem wird ein von der Brennstoffzelle erzeugter und/oder durch die Brennstoffzelle fließender elektrischer Strom gemessen und daraus über eine Menge-Strom-Beziehung eine Menge des von der Brennstoffzelle verstromten und/oder verbrannten Wasserstoffgases berechnet. Die hierbei berechneten Mengen Wasserstoffgas werden miteinander verglichen. Somit wird die Menge, üblicherweise Teilchenzahl, des zu der Brennstoffzelle strömenden Wasserstoffgases mit der von der Brennstoffzelle verbrannten Menge, üblicherweise Teilchenzahl, Wasserstoffgas verglichen.

Hierbei ist vorgesehen, dass die Menge-Druck-Beziehung bzw. -Relation einen üblicherweise mathematischen und/oder funktionalen Zusammenhang des Drucks und der Menge des strömenden Wasserstoffgases beschreibt. Die Menge-Strom-Beziehung bzw. Menge-Strom-Relation beschreibt einen üblicherweise mathematischen und/oder funktionalen Zusammenhang des von der Brennstoffzelle erzeugten Stroms und der Menge des durch Verbrennen verstromten Wasserstoffgases in der Brennstoffzelle.

Üblicherweise wird durch Erzeugen des Stroms in der Brennstoffzelle Wasserstoff verbrannt, was auch dadurch beschrieben werden kann, dass das Wasserstoffgas, aber auch der gasförmige Sauerstoff, die in der Brennstoffzelle miteinander reagieren, verstromt werden, da bei einer Reaktion des Wasserstoffgases mit dem gasförmigen Sauerstoff elektrische Energie und somit Strom erzeugt wird.

Als die Menge-Druck-Beziehung kann die Gleichung für das ideale Gas oder eine Virialgleichung für Wasserstoffgas verwendet werden. Es ist auch möglich, für die Menge-Druck-Beziehung eine Kennlinie zu verwenden, wobei eine derartige Kennlinie die Gleichung für das ideale Gas oder die Virialgleichung für Wasserstoffgas des Brennstoffzellensystems beschreibt. Diese Kennlinie kann zumindest punktweise gemessen und/oder berechnet werden.

Für die Menge-Strom-Beziehung kann die Gleichung des Faraday-Gesetzes und/oder eine Kennlinie verwendet werden. Dabei kann diese Kennlinie auch das Faraday-Gesetz beschreiben und an das Brennstoffzellensystem, dessen Dichtheit zu überprüfen ist, angepasst sein. Auch diese Kennlinie kann zumindest punktweise gemessen und/oder berechnet werden.

Mit den verwendeten Beziehungen bzw. Relationen, d. h. mit der Menge-Druck-Beziehung und der Menge-Strom-Beziehung, mit denen eine Abhängigkeit der Menge des gasförmigen Wasserstoffs von dem Druck bzw. dem Strom beschrieben wird, kann auf zwei unterschiedliche Arten die Menge und somit eine Teilchenzahl sowie Masse des Wasserstoffs bestimmt werden.

Für die Gleichung des idealen Gases als eine mögliche Menge-Druck-Beziehung gilt:

$$p*V = m*R*T.$$

Hierbei ist p der Druck des Wasserstoffgases in der Leitung, V das von dem Gas eingenommene Volumen und R die Gaskonstante, wobei die universelle Gaskonstante $R_n = 8,314462$ Jmol$^{-1}$K$^{-1}$ oder die spezifische Gaskonstante $R_s$ für Wasserstoff verwendet werden kann. Nach Auflösung der Gleichung des idealen Gases ergibt sich für die druckabhängige Menge:

$$m = (p*V) / (R*T).$$

Alternativ oder ergänzend kann auch eine Virialgleichung des Wasserstoffgases zur Darstellung der Menge-Druck-Beziehung verwendet werden, bei der es sich üblicherweise um eine Reihenentwicklung einer allgemeinen Gasgleichung und somit bspw. auch um eine Reihenentwicklung der Gleichung für das ideale Gas handeln kann. Eine derartige Virialgleichung ist bspw. in dem Artikel "Standardized Equation for Hydrogen Gas Densities for Fuel Consumption Applications" von Eric W. Lemmon et al. beschrieben und lautet:

$$m = M [\rho_E(p_E,T_E) - \rho_A(p_A,T_A)] V$$

$$= MV/R [p_E (T_E k(p_E,T_E))^{-1} - p_A (T_A k(p_A,T_A))^{-1}].$$

Dabei ist M die molare Masse, $\rho$ die molare Dichte, die von dem Druck und der Temperatur abhängig ist, und k ein Faktor für die Kompressibilität, der ebenfalls von dem Druck und der Temperatur abhängig ist. Dabei sind $\rho_E$, $p_E$ und $T_E$ jene Größen, die am Ende eines beobachteten Zeitintervalls gemessen werden, und $\rho_A$, $p_A$ und $T_A$ jene Größen, die am Anfang dieses Zeitintervalls gemessen werden. Der Faktor k für die Kompressibilität stellt in der voranstehend dargelegten Virialgleichung für die Menge an Wasserstoff eine Abweichung vom Idealfall dar.

Laut dem Faraday-Gesetz als mögliche Menge-Strom-Beziehung gilt für die Menge an Gas, das in der Brennstoffzelle abgeschieden wird:

$$m = t_B{*}I \,/\, (z{*}F).$$

Dabei ist $t_B$ die Betrachtungszeit, bspw. die Länge des genannten Zeitintervalls, I der Strom, z eine Wertigkeit des Wasserstoffgases und F = 96485,3365 C mol$^{-1}$ die Faraday-Konstante.

Sämtliche zu verwendenden Größen, d. h. für den Druck p, das Volumen V, die Temperatur T, der Faktor k für die Kompressibilität und $\rho$ für die molare Dichte werden üblicherweise zu mindestens einem bestimmten Zeitpunkt gemessen und als konstant angenommen. In Ausgestaltung des Verfahrens ist es möglich, die genannten Größen, d. h. den Druck p(t), das Volumen V(t), die Temperatur T(t), den Faktor k(t) für die Kompressibilität und $\rho$(t) für die molare Dichte als zeitabhängige Größen zu erfassen und/oder zu verwenden, wodurch eine Dynamik in dem Brennstoffzellensystem berücksichtigt werden kann. Hierzu werden die genannten Größen mindestens zweimal gemessen, in der Regel zu einem Zeitpunkt am Anfang und an einem Zeitpunkt am Ende des Zeitintervalls. Es ist auch möglich, einen zeitlichen Verlauf dieser Größen während des Zeitintervalls zu messen.

Somit wird die Menge des Wasserstoffgases einmal druckabhängig und einmal stromabhängig bestimmt. Falls für mindestens eine Abhängigkeit des Wasserstoffgases, d. h. für die Menge-Druck-Beziehung und/oder die Menge-Strom-Beziehung, eine Kennlinie verwendet wird, kann eine derartige Kennlinie auf einer der voranstehend beschriebenen Gleichungen beruhen und als Zuordnung der Menge des Wasserstoffgases zu dem Druck und/oder dem Strom in einem Speicher des Steuergeräts zur Umsetzung des erfindungsgemäßen Verfahrens abgelegt sein. Mindestens eine derartige Kennlinie kann für ein Brennstoffzellensystem, für das das Verfahren durchzuführen ist, durch Messen und/oder Berechnen individuell bestimmt und ggf. betriebsbegleitend durch wiederholtes Messen und/oder Berechnen angepasst werden. Berechnungen können unter Berücksichtigung einer der genannten Gleichungen durchgeführt werden.

Von einer Undichtheit ist auszugehen, falls die berechnete Menge des zu der Brennstoffzelle strömenden Wasserstoffgases größer, üblicherweise wesentlich größer als die durch Berechnung ermittelte, von der Brennstoffzelle verstromte Menge Wasserstoffgas ist. Falls die beiden Mengen gleich groß sind, ist das ein Indiz dafür, dass das Brennstoffzellensystem dicht ist.

Bei dem Verfahren können jeweils mehrere zeitabhängige Werte für den gemessenen Druck und den gemessenen Strom summiert werden, die sich bspw. zu mehreren Zeitpunkten über das Zeitintervall ergeben, und zur Berechnung der zu vergleichenden Mengen verwendet werden. Dabei ist es möglich, den Strom I über die Beobachtungs- oder Betrachtungszeit $t_B$ als Dauer des Zeitintervalls zu integrieren, wobei die insgesamt geflossene Ladung Q und daraus weiter die Menge m des Wasserstoffgases berechnet werden kann.

In Ausgestaltung kann das Verfahren für ein Brennstoffzellensystem durchgeführt werden, das mehrere Behälter zum Speichern von Wasserstoff aufweist, wobei sämtliche Behälter über eine gemeinsame Leitung mit der Brennstoffzelle verbunden sind. An dieser für alle Behälter gemeinsamen Leitung ist der zumindest eine Drucksensor angeordnet, mit dem der zum Berechnen der zu der Brennstoffzelle strömenden Menge an Wasserstoff notwendige Druck gemessen wird. Zum Überprüfen der Dichtheit wird nur einer der Behälter geöffnet, wohingegen alle anderen Behälter geschlossen werden. Somit wird ein zu berücksichtigendes Volumen für das strömende Gas reduziert, wodurch eine Genauigkeit für den zu messenden Druck erhöht werden kann.

Ergänzend kann auch eine Menge Luft und somit Sauerstoff, die bzw. der zu der Kathode der Brennstoffzelle strömt, bestimmt und mit zumindest einer der bestimmten Mengen Wasserstoff verglichen werden. Die Menge der Luft kann gemessen werden. Es ist auch möglich, dass ein Druck der Luft gemessen und daraus mit einer Menge-Druck-Beziehung für den Sauerstoff in der Luft, bspw. der Gleichung für das ideale Gas oder einer Kennlinie, die Menge der Luft und/oder des Sauerstoffs, die bzw. der zu der Brennstoffzelle strömt, berechnet wird. Die Menge Luft oder Sauerstoff wird mit der über den Druck bestimmten Menge Wasserstoff und/oder mit der über den Strom bestimmten Menge an Wasserstoff verglichen. Falls über den Druck und/oder das Kennfeld nur die Menge der Luft bestimmbar ist, kann über ein zusätzliches Kennfeld die Menge an Sauerstoff als bspw. druck- und/oder temperaturabhängiger prozentualer Bestandteil der Luft bestimmt werden.

Außerdem kann eine Temperatur des mindestens einen Behälters gemessen und über den Joule-Thomson-Effekt ein Durchsatz an Wasserstoffgas für den mindestens einen Behälter bestimmt werden. Dabei ist ein Verlauf der Temperatur des Wasserstoffgases in den verbleibenden Behältern, deren Ventil jeweils geschlossen ist, zu berücksich-

4

tigen. Die Temperatur des Wasserstoffs in dem mindestens einen Behälter kann mit einer Temperatur der Luft in der Umgebung und somit mit einer Außentemperatur verglichen werden.

Der hier vorwendete Joule-Thomson-Effekt beschreibt eine Temperaturänderung eines Gases, d. h. des Wasserstoffgases aber auch des Sauerstoffs in der Luft, bei Änderung des Drucks in einem Behälter durch Drosselung, wobei ein Volumen des Gases vergrößert wird, wodurch sich das Gas entspannen kann und seinen Druck verringert. Ein hierbei verwendeter Joule-Thomson-Koeffizient $\mu_{JT} = \Delta T/\Delta p$ beschreibt die druckabhängige Temperaturänderung $\Delta T$. Somit kann bei konstantem Volumen ebenfalls die Menge m des Wasserstoffgases berechnet und ebenfalls als Menge-Druck-Beziehung verwendet werden. Zudem kann bei konstantem Volumen V eine dazugehörige, gemessene Druckänderung $\Delta p$ bestimmt und mit der Druckänderung $\Delta p$ aus dem Joule-Thomson-Koeffizienten $\mu_{JT}$ verglichen werden.

Außerdem können Temperaturen von Wasserstoffgas in mehreren nicht aktiven Behältern miteinander verglichen werden. Falls die Temperatur des Wasserstoffgases in einem nicht aktiven, geschlossenen Behälter von einer der anderen gemessenen Temperaturen, d. h. des Wasserstoffgases in einem anderen Behälter und/oder der Luft außerhalb, abweicht, ist das ein Indiz für das Vorliegen eines Lecks in dem entsprechenden Behälter.

Die erfindungsgemäße Anordnung weist wenigstens eine Steuergeräteanordnung auf und ist zum Überprüfen einer Dichtheit eines Brennstoffzellensystems ausgebildet, das eine Brennstoffzelle und mindestens einen Behälter zum Speichern von Wasserstoffgas aufweist, wobei der mindestens eine Behälter über eine Leitung, entlang welcher zumindest ein Drucksensor angeordnet ist, mit der Brennstoffzelle verbunden ist. Zumindest ein Drucksensor misst einen Druck des zu der Brennstoffzelle strömenden Wasserstoffgases in dieser Leitung, wobei die Steuergeräteanordnung aus dem gemessenen Druck über eine Menge-Druck-Beziehung des Gases, bspw. mit der Gleichung für das ideale Gas, der Virialgleichung und/oder einer Kennlinie zur Darstellung der Menge-Druck-Beziehung die Menge des Wasserstoffgases vor der Brennstoffzelle berechnet. Ein Strommessgerät misst einen durch die Brennstoffzelle erzeugten Strom, wobei die Steuergeräteanordnung aus dem gemessenen Strom mit einer Menge-Strom-Beziehung, bspw. mit der Gleichung des Faraday-Gesetzes oder über eine Kennlinie, eine Menge des von der Brennstoffzelle verstromten Wasserstoffgases berechnet. Außerdem vergleicht die Steuergeräteanordnung die berechneten Mengen miteinander.

Die Anordnung kann weiter den zumindest einen Drucksensor und/oder das Strommessgerät aufweisen und ist zum Durchführen mindestens eines Schritts des erfindungsgemäßen Verfahrens ausgebildet. Eine Messung des Stroms kann bspw. alternativ mit einer digitalen Spannungsmessung über einen Shunt bzw. Nebenanschlusswiderstand als mögliche Ausführungsform eines Strommessgeräts bestimmt werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

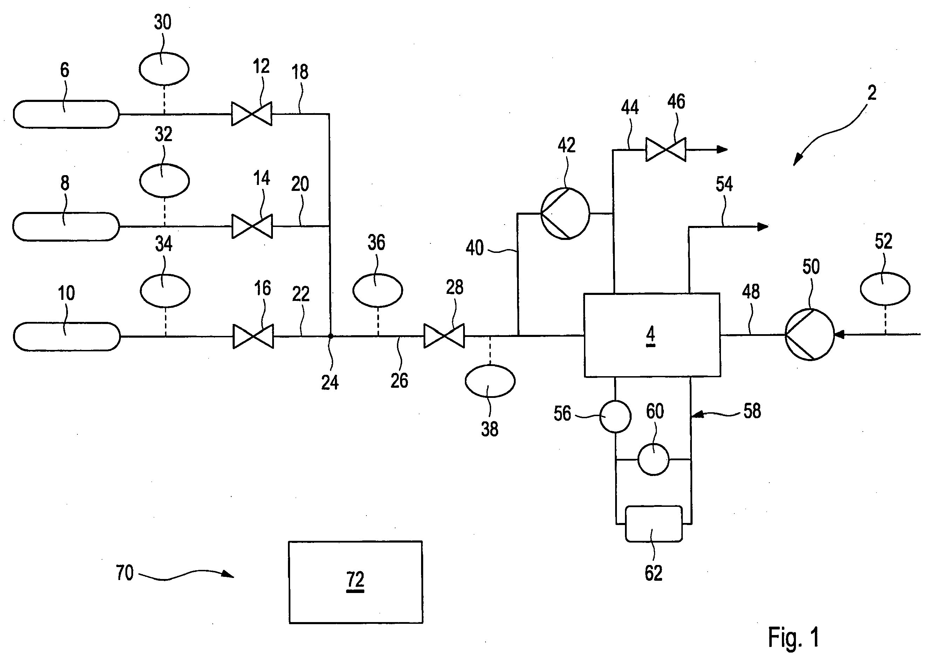

Figur 1 zeigt in schematischer Darstellung ein Beispiel für ein Brennstoffzellensystem mit einer Ausführungsform der erfindungsgemäßen Anordnung, die zur Durchführung einer Ausführungsform des erfindungsgemäßen Verfahrens zum Überprüfen einer Dichtheit des Brennstoffzellensystems ausgebildet ist.

Das in Figur 1 schematisch dargestellte Brennstoffzellensystem 2 umfasst eine Brennstoffzelle 4 sowie mehrere, hier als Zylinder ausgebildete Behälter 6, 8, 10 zum Speichern von gasförmigem Wasserstoff bzw. von Wasserstoffgas, der bzw. das zum Verstromen in der Brennstoffzelle 4 vorgesehen ist, wobei Wasserstoffgas mit Sauerstoff reagiert und Strom erzeugt wird. Dabei ist jedem dieser Behälter 6, 8, 10 ein Ventil 12, 14, 16 zugeordnet, mit dem ein jeweiliger Behälter 6, 8, 10 zu öffnen und zu schließen ist. Weiterhin ist jedes, einem Behälter 6, 8, 10 zugeordnete Ventil 12, 14, 16 mit einer behälterindividuellen Leitung 18, 20, 22 verbunden, wobei diese behälterindividuellen Leitungen 18, 20, 22 an einer gemeinsamen Schnittstelle 24 in eine für alle Behälter 6, 8, 10 gemeinsame Leitung 26 münden. Diese gemeinsame Leitung 26 ist wiederum mit der Brennstoffzelle 4 verbunden, wobei in dem hier dargestellten Beispiel des Brennstoffzellensystems 2 entlang der gemeinsamen Leitung 26 ein gemeinsames als Druckregelventil ausgestaltetes Ventil 28 angeordnet ist.

Außerdem ist jedem Behälter 6, 8, 10 ein behälterindividueller Temperatursensor 30, 32, 34 zum Bestimmen der Temperatur des Wasserstoffs in jeweils einem Behälter 6, 8, 10 zugeordnet. Entlang eines ersten Abschnitts der gemeinsamen Leitung 26 zwischen der gemeinsamen Schnittstelle 24 und dem gemeinsamen Ventil 28 ist ein als Hochdrucksensor ausgebildeter Drucksensor 36 zum Messen eines Drucks des gasförmigen Wasserstoffs in dem ersten Abschnitt der gemeinsamen Leitung 26 angeordnet. In einem zweiten Abschnitt, der für sämtliche Behälter 6, 8, 10 gemeinsamen Leitung 26, der zwischen dem gemeinsamen Ventil 28 und einer Anodenseite der Brennstoffzelle 4 angeordnet ist, ist hier ein als Niederdrucksensor ausgebildeter Drucksensor 38 angeordnet, mit dem ein Druck des Gases innerhalb des zweiten Abschnitts der gemeinsamen Leitung 26 zu messen ist.

Figur 1 zeigt auch, dass die Brennstoffzelle 4 anodenseitig mit einer Rückführleitung 40 mit dem zweiten Abschnitt der gemeinsamen Leitung 26 verbunden ist. Entlang dieser Rückführleitung 40 ist eine bspw. als Pumpe ausgebildete Fördereinheit 42 angeordnet, so dass die Rückführleitung 40 mit der Fördereinheit 42 eine Rücklaufschleife (Rezyklierloop) für gasförmigen Wasserstoff aus der Brennstoffzelle 4 zu der gemeinsamen Leitung 26 bildet. Außerdem ist die Brennstoffzelle 4 anodenseitig mit einer Abgasleitung 44, entlang welcher ein Ablassventil 46 (Purgeventil) angeordnet ist, verbunden, über das aus der Brennstoffzelle 4 überschüssiger gasförmiger Wasserstoff in die Umgebung abgelassen werden kann.

Weiterhin ist die Brennstoffzelle 4 kathodenseitig mit einer Luftleitung 48 verbunden, entlang welcher eine weitere bspw. als Pumpe 50 ausgebildete Fördereinheit angeordnet ist, wobei Luft, die mit der Fördereinheit 50 aus der Umgebung angesaugt wird, der Brennstoffzelle 4 kathodenseitig über die Luftleitung 48 zugeführt wird. Mindestens eine Zustandsgröße der Luft aus der Umgebung wird mit einem Luftsensor 52, der der Luftleitung 48 zugeordnet ist, gemessen.

Bei einem Betrieb der Brennstoffzelle 4 reagiert der gasförmige Wasserstoff aus den Behältern 6, 8, 10 mit dem Sauerstoff als Bestandteil der Luft der Umgebung zu Wasser, das über eine Wasserleitung 54 aus der Brennstoffzelle 4 abgeführt wird. In der Brennstoffzelle 4 wird chemische Energie, die bei einer Reaktion des Wasserstoffs mit dem Sauerstoff entsteht, in elektrische Energie umgewandelt.

Ein dabei erzeugter Strom wird mit einem bspw. als Amperemeter 56 ausgebildeten Strommessgerät gemessen, das innerhalb eines als Mittelspannungsnetz ausgebildeten Schaltkreises 58, der mit der Brennstoffzelle 4 verbunden ist, angeordnet ist. Weiterhin weist dieser Schaltkreis 58 ein Spannungsmessgerät 60 auf, das parallel zu der Brennstoffzelle 4 geschaltet ist und mit dem eine an der Brennstoffzelle 4 anliegende Spannung und/oder Spannungslage gemessen wird. Außerdem ist die Brennstoffzelle 4 über den Schaltkreis 58 mit mindestens einem Verbraucher 62 (EMS) verbunden.

Die in Figur 1 ebenfalls schematisch dargestellte Ausführungsform der erfindungsgemäßen Anordnung 70 umfasst eine Steuergeräteanordnung 72, die wiederum mindestens ein Steuergerät umfasst. Dabei ist vorgesehen, dass die Steuergeräteanordnung 72 mit sämtlichen vorgestellten Komponenten des beschriebenen Brennstoffzellensystems 2 verbunden ist. Die hierfür vorgesehenen Leitungen zum Austausch von Signalen zwischen der Steuergeräteanordnung 72 und den Komponenten des Brennstoffzellensystems 2 sind in Figur 1 wegen der besseren Übersichtlichkeit nicht dargestellt.

Es ist vorgesehen, dass der Steuergeräteanordnung 72 über Komponenten des Brennstoffzellensystems 2, die als Sensoren ausgebildet sind, d. h. von den Temperatursensoren 30, 32, 34 sowie den Drucksensoren 36, 38 Signale zu Zustandsgrößen, d. h. Temperatur sowie Druck, des gasförmigen Wasserstoffs bereitgestellt werden. Über den als Luftsensor 52 ausgebildeten Sensor wird der Steuergeräteanordnung 72 ein Signal über zumindest eine Zustandsgröße der Luft der Umgebung bereitgestellt. Von den beiden elektrischen Sensoren, d. h. dem Strommessgerät 56 sowie dem Spannungsmessgerät 60, werden der Steuergeräteanordnung 72 Signale zu elektrischen Betriebsparametern, d. h. dem Strom und der Spannung der Brennstoffzelle 4, bereitgestellt. Durch die bereitgestellten sensorischen Signale wird die Steuergeräteanordnung 72 über einen Betriebszustand des Brennstoffzellensystems 2 informiert.

Außerdem ist die Steuergeräteanordnung 72 dazu ausgebildet, Funktionen von Aktoren des Brennstoffzellensystems 2 zu kontrollieren und somit zu steuern und/oder zu regeln. Hierzu werden diesen Aktoren von der Steuergeräteanordnung 72 Signale bereitgestellt. Dabei stellt die Steuergeräteanordnung 72 den als Ventile 12, 14, 16, 28, 46 ausgebildeten Aktoren Signale bereit. Somit sind die genannten Ventile 12, 14, 16, 28, 46 üblicherweise durch Bestromung, die von der Steuergeräteanordnung 72 bereitgestellt wird, zu öffnen und/oder geöffnet zu halten. Über geöffnete Ventile 12, 14, 16, 28, 46 kann gasförmiger Wasserstoff strömen. Falls die Ventile 12, 14, 16, 28, 46 von der Steuergeräteanordnung 72 nicht bestromt werden, sind bzw. werden diese geschlossen. Außerdem werden die als Fördereinheiten 42, 50 ausgebildeten Aktoren des Brennstoffzellensystems 2 von der Steuergeräteanordnung 72 aktiviert, so dass eine Menge eines durch diese Fördereinheiten 42, 50 zu fördernden Fluids, d. h. gasförmiger Wasserstoff und/oder Luft, kontrolliert wird.

Mit der Steuergeräteanordnung 72 kann ein üblicher Betrieb des Brennstoffzellensystems 2 kontrolliert werden. Unabhängig davon ist die Steuergeräteanordnung 72 dazu ausgebildet, mindestens einen Schritt des erfindungsgemäßen Verfahrens zu kontrollieren und somit auszuführen. Die beschriebene Steuergeräteanordnung 72 kann mindestens eine Steuereinheit und somit ggf. auch mehrere Steuereinheiten umfassen, die jedoch miteinander verbunden sind und ggf. von einer übergeordneten Steuereinheit kontrolliert werden.

Je nach Definition kann mindestens eine der Komponenten des Brennstoffzellensystems 2, mit der mindestens ein Schritt des erfindungsgemäßen Verfahrens durchführbar ist, auch als Komponente der erfindungsgemäßen Anordnung 70 ausgebildet sein. Dies betrifft die Sensoren sowie die Aktoren des Brennstoffzellensystems. Demnach ist es möglich, dass zumindest ein Sensor, d. h. ein Temperatursensor 30, 32, 34, ein Drucksensor 36 und/oder ein elektrischer Sensor, d. h. das Strommessgerät 56 und/oder Spannungsmessgerät 60, als jeweilige Komponente der erfindungsgemäßen Anordnung 70 ausgebildet sein können. Weiterhin ist es möglich, dass zumindest ein Aktor, d. h. zumindest ein Ventil 12, 14, 16, 28, 46 und/oder zumindest eine Fördereinheit 42, 50 als eine mögliche Komponente der erfindungsgemäßen Anordnung 70 ausgebildet sein kann.

Gasförmiger Wasserstoff, der aus mindestens einem der Behälter 6, 8, 10 über eine behälterindividuelle Leitung 18, 20, 22 in den ersten Abschnitt der gemeinsamen Leitung 26 strömt und einen erhöhten Druck von bspw. 700 bar aufweist, wobei ein Druck des Wasserstoffs in dem ersten Abschnitt der gemeinsamen Leitung 26 über den als Hochdrucksensor ausgebildeten Drucksensor 36 genau bestimmt werden kann, wird von dem hohen, auch als Versorgungsdruck bezeichneten Druck über das gemeinsame Ventil 28 auf einen niedrigeren Druck entspannt, so dass der gasförmige Wasserstoff in dem zweiten Abschnitt der gemeinsamen Leitung 26, der mit der Brennstoffzelle 4 anodenseitig verbunden ist, einen niedrigeren, zur Durchführung der Reaktion in der Brennstoffzelle 4 geeigneten Druck aufweist. Dieser niedrigere Druck in dem zweiten Abschnitt der gemeinsamen Leitung 26 beträgt typischerweise 2 bis 10 bar und kann über den in Figur 1 gezeigten, als Niedrigdrucksensor ausgebildeten Drucksensor 38 oder alternativ über einen nicht weiter gezeigten Differenzdrucksensor bestimmt werden.

Gasförmiger Wasserstoff auf niedrigerem Druck wird der Brennstoffzelle 4 anodenseitig zugeführt, die üblicherweise in einem Wasserstoff-Überschuss gefahren wird. Nicht verwendeter und/oder überschüssiger Wasserstoff auf der Anodenseite der Brennstoffzelle 4 kann über die Rückführleitung 40 und/oder die Abgasleitung 44 periodisch und/oder nach Bedarf in geringfügigen Mengen abgelassen werden.

Von der kathodenseitig über die Fördereinheit 50 aus der Umgebung angesaugten Luft wird über den Luftsensor 52 deren Menge, Temperatur und/oder Druck bestimmt. Außerdem wird die Luft mit der Fördereinheit 50 verdichtet. Der Sauerstoff aus der Luft reagiert in der Brennstoffzelle 4 mit dem gasförmigen Wasserstoff, wobei Strom erzeugt wird, der von dem Strommessgerät 56 gemessen und von dem mindestens einen Verbraucher 62, der auch als Hauptverbraucher bezeichnet werden kann, verbraucht wird. Der mindestens eine Verbraucher 62 und somit auch mehrere Verbraucher 62 in dem als Mittelspannungsnetz ausgebildeten Schaltkreis 58 bestimmt bzw. bestimmen die elektrische Größe, d. h. eine Spannung U und einen Strom I ebenfalls sensorisch und übermitteln Signale hierzu über die nicht dargestellten Leitungen, die als Teil eines als CAN (Controlled Area Network) ausgebildeten Netzwerks ausgebildet sein können, an die Steuergeräteanordnung 72.

Zum Versorgen der Brennstoffzelle 4 mit Wasserstoff, der in mehreren Behältern 6, 8, 10 gespeichert ist, wird in der beschriebenen Ausführungsform jeweils nur eines der Ventile 12, 14, 16 geöffnet. Wenn dieses eine Ventil 12, 14, 16 geöffnet ist, sind oder werden alle anderen Ventile 12, 14, 16 geschlossen. Das geöffnete Ventil 12, 14, 16 wird wieder geschlossen, wenn die zumindest eine von mindestens einem gemeinsamen Gassensor, bspw. einem Drucksensor 36, ermittelte Zustandsgröße des Wasserstoffs in der gemeinsamen Leitung 26 von einem Sollwert um einen Toleranzwert abweicht. Alternativ oder ergänzend kann das geöffnete Ventil 12, 14, 16 ebenfalls wieder geschlossen werden, wenn eine von einem behälterindividuellen Temperatursensor 30, 32, 34 gemessene Temperatur als Zustandsgröße des gasförmigen Wasserstoffs in dem jeweiligen Behälter 6, 8, 10 um einen Toleranzwert von einem Sollwert abweicht.

Diese Vorgehensweise kann bei einem Dauerbetrieb des Brennstoffzellensystems und/oder bei einer Überprüfung der Dichtheit des Brennstoffzellensystems 2 durchgeführt werden. Außerdem kann für die Behälter 6, 8, 10 eine Reihenfolge definiert werden, wobei die den Behältern 6, 8, 10 zugeordneten Ventile 12, 14, 16 der Reihenfolge entsprechend bei Bedarf nacheinander geöffnet werden. Der Sollwert der zumindest einen Zustandsgröße, d. h. einer behälterindividuellen Temperatur und/oder des Drucks in der gemessenen Leitung 26, kann situativ angepasst und/oder fest vorgegeben werden. Der Toleranzwert der zumindest einen Zustandsgröße kann ebenfalls situativ angepasst und/oder fest vorgegeben werden.

Als zumindest eine Zustandsgröße kann ein Druck, eine Menge und/oder eine Temperatur des gasförmigen Wasserstoffs in der gemeinsamen Leitung 26 gemessen werden.

Durch diese Maßnahme ist es möglich, reihum immer nur ein behälterindividuelles Ventil 12, 14, 16 zu bestromen und somit zu öffnen. Da somit jeweils nur ein Behälter 6, 8, 10 geöffnet ist und sich somit Wasserstoff nur aus einem der Behälter 6, 8, 10 mit vergleichsweise geringem Volumen entleert, sinkt der mit dem als Hochdrucksensor ausgebildeten Drucksensor 36 gemessene Druck schneller als wenn alle Ventile 12, 14, 16 gleichzeitig geöffnet wären und somit ein vergleichsweise größeres Volumen entleert wird. Somit kann der Druck von dem als Hochdrucksensor ausgebildeten Drucksensor 36 in der gemeinsamen Leitung 26 genauer bestimmt werden. Infolgedessen ist es auch möglich, den Verbrauch an Wasserstoff durch die Brennstoffzelle 4 genauer zu bestimmen.

Zum Bestimmen des Verbrauchs an Wasserstoff durch die Brennstoffzelle 4 wird über eine Menge-Druck-Beziehung, die einen mathematischen und/oder thermodynamischen Zusammenhang der Menge des Wasserstoffgases und dessen Drucks beschreibt, die Menge des Wasserstoffs bestimmt. Falls hierbei die Gleichung für das ideale Gas verwendet wird, wird bei bekanntem Druck und bekannter Temperatur eine Menge des Wasserstoffs bestimmt. Dasselbe ist auch durch Verwendung einer Virialgleichung des Wasserstoffgases und/oder einer Kennlinie für die Menge-Druck-Beziehung möglich.

Weiterhin kann über die Stromäquivalenz, die durch die Menge-Strom-Beziehung, bspw. ein Kennfeld und/oder das Faraday-Gesetz $m = I/F$, beschrieben ist, wobei I der üblicherweise von dem Strommessgerät 56 gemessene Strom und F die Faraday-Konstante $F = 96485{,}3365$ C/mol ist, ebenfalls die Menge an verbranntem und somit verstromten Wasserstoff bestimmt werden. Durch Vergleich aus dem Verbrauch, der über den Druck ermittelt wird, der von dem mindestens einen der Drucksensor 36 in der gemeinsamen Leitung 26 gemessen wird, und dem Verbrauch, der mit der Stromäquivalenz, bspw. über das Faraday-Gesetz, ermittelt wird, kann eine Aussage darüber getroffen werden, ob das Brennstoffzellensystem 2 eine Undichtheit bzw. ein Leck aufweist.

In Ausgestaltung der Erfindung ist es möglich, die verbrauchten Mengen über eine zeitliche Summierung der Zustandsgrößen Druck und Strom zu bestimmen. Alternativ oder ergänzend können auch geglättete Messsignale dieser Zustandsgrößen verwendet werden, dies betrifft Messsignale zumindest eines Drucksensors 36 und/oder des Strommessgeräts 56, gekoppelt mit einer Glättung der Messsignale. Eine derartige Aussage über die verbrauchten Mengen ist bei gleichzeitigem Öffnen sämtlicher Ventile 12, 14, 16 und einem daraus resultierenden vergrößerten Volumen für den Wasserstoff, wodurch sich der Druck, bspw. der hohe Druck in dem ersten Abschnitt der gemeinsamen Leitung 26, nur sehr langsam ändert, nicht möglich.

In weiterer Ausgestaltung ist zu berücksichtigen, dass eine Abweichung einer druckabhängigen Menge und einer stromabhängigen Menge an Wasserstoff nicht nur von einer Undichtigkeit, sondern auch von einer Drift eines der verwendeten Sensoren resultieren kann. Deshalb können auch interne Vergleiche und/oder Validierungen von Messsignalen durchgeführt werden, wodurch Hinweise auf Fehler von Sensoren und/oder Messwertgebern bereitgestellt werden.

So ist es möglich, zusätzlich eine Abnahme einer von einem Temperatursensor 30, 32, 24 gemessenen Temperatur, die durch den Joule-Thomson Effekt beschrieben wird, eines aktiven und somit geöffneten Behälters 6, 8, 10 zeitabhängig zu bestimmen. Hierbei wird aus einem Behälter 6, 8, 10 eine geringere Menge an Wasserstoff entnommen, als dies bei mehreren gleichzeitig geöffneten Behältern 6, 8, 10 zur gleichen Zeit der Fall ist, da der Joule-Thomson Effekt durchsatzabhängig und bei nur einem geöffneten Behälter 6, 8, 10 genauer zu bestimmen ist. Der Joule-Thomson Effekt kann bei lediglich einem geöffneten Behälter 6, 8, 10 besser als bei mehreren geöffneten Behältern gemessen werden. Um Effekte einer Umgebungstemperatur zu eliminieren, kann hierzu auch gleich die bzw. der von dem Gassensor 52 gemessene Temperatur und/oder gemessene Druck der Luft aus der Umgebung in einen Vergleich einbezogen werden, wobei.Effekte, die von der Umgebungstemperatur abhängig sind, eliminiert werden können. Es ist alternativ auch möglich, die Umgebungstemperatur mit einem anderen, hier nicht gezeigten Temperatursensor zu messen. Außerdem kann ein Temperaturverlauf der nicht aktiven Behälter 6, 8, 10 mit eingebunden werden, wobei ein Verlauf der Temperatur zumindest eines der nicht aktiven Behälter 6, 8, 10 einem Langzeittrend der Temperatur der Luft in der Umgebung folgen sollte. Sollte hier die Temperatur eines der nicht aktiven Behälter 6, 8, 10 von der Temperatur der Luft der Umgebung abweichen, bspw. wenn die Temperatur fällt, so ist dies ein Indikator dafür, dass dieser Behälter 6, 8, 10 ein Leck aufweist, was ebenfalls durch den Joule-Thomson Effekt nachgewiesen werden kann.

Üblicherweise soll die Temperatur eines Behälters 6, 8, 10 nach Abstellen der Brennstoffzelle 4 immer sehr nah an der Temperatur der anderen Behälter 6, 8, 10 sein, sofern eine Leckage ausgeschlossen werden kann. Falls dies für einen der Behälter 6, 8, 10 nicht der Fall sein sollte, so ist mit einem Fehler in einem diesem Behälter 6, 8, 10 zugeordneten Temperatursensor 30, 32, 34 zu rechnen. Diesbezüglich kann eine Langzeitbeobachtung der Temperaturen vorgesehen sein.

Sollte die Temperatur in einem nicht aktiven und demnach nicht geöffneten Behälter 6, 8, 10 sinken, ohne dass andere Temperatursensoren 30, 32, 34 weiterer nicht aktiver und somit geschlossener Behälter 6, 8, 10 auch eine derartige Absenkung der Temperatur aufweisen und/oder dass die Temperatur der Luft der Umgebung sinkt, so kann daraus geschlossen werden, dass dieser Behälter 6, 8, 10 eine Leckage in einem Dichtungsbereich nach außen aufweist.

Wird eine Leckage auf oben beschriebene Weise in einem der Behälter 6, 8, 10 festgestellt und anschließend einer der anderen Behälter 6, 8, 10 geöffnet, wobei hier keine Leckage festgestellt wird, so ist es ein Hinweis dafür, dass eine besagte Leckage im Bereich des Behälters 6, 8, 10 jedoch nicht im gesamten Brennstoffzellensystem 2, bspw. in einer Abdichtung, vorhanden ist. Auf diese Weise kann eine mögliche Störung schnell entdeckt werden, wobei auch eine Notfalllauffähigkeit (Limp-Home-Funktionalität) des Kraftfahrzeugs berücksichtigt werden kann. Hierbei wird das Kraftfahrzeug bei reduzierter Leistung sicher betrieben, so dass dieses in einem derartigen Betriebsmodus nach Hause oder in eine Werkstatt gefahren werden kann.

Durch Bestimmung einer fehlenden stromabhängigen Menge an Wasserstoff, die über das Faraday-Gesetz oder eine Kennlinie zur Darstellung der Menge-Strom-Beziehung bestimmt wird, durch Vergleich mit einer druckabhängigen Menge, die über die Gleichung des idealen Gases über die Virialgleichung des Wasserstoffs und/oder die Kennlinie für die Menge-Druck-Beziehung bestimmt wird, kann auch abgeschätzt werden, ob ein unsicherer Zustand vorliegt, der ein sofortiges Stilllegen des Brennstoffzellensystems 2 erfordert, oder ob zumindest ein Werkstattbesuch erforderlich ist.

**Patentansprüche**

1.  Verfahren zum Überprüfen einer Dichtheit eines Brennstoffzellensystems (2), das eine Brennstoffzelle (4) und mindestens einen Behälter (6, 8, 10) zum Speichern von Wasserstoffgas aufweist, wobei der mindestens eine Behälter (6, 8, 10) über eine Leitung (26), entlang der zumindest ein Drucksensor (36) angeordnet ist, mit der Brennstoffzelle (4) verbunden ist, wobei zum Durchführen des Verfahrens mit dem zumindest einen Drucksensor (36) ein Druck des zu der Brennstoffzelle (4) strömenden Wasserstoffgases in dieser Leitung (26) gemessen und eine Menge des zu der Brennstoffzelle (4) strömenden Wasserstoffgases über eine Menge-Druck-Beziehung berechnet wird, die einen Zusammenhang des Drucks und der Menge des Wasserstoffgases beschreibt, und wobei ein von der Brennstoffzelle (4) erzeugter Strom gemessen und eine Menge des von der Brennstoffzelle (4) verstromten Wasserstoffgases über eine Menge-Strom-Beziehung berechnet wird, die einen Zusammenhang des von der Brennstoffzelle (4) erzeugten Stroms und der Menge des verbrannten Wasserstoffgases beschreibt, wobei die berechneten Mengen Wasserstoffgas miteinander verglichen werden, wobei eine Undichtheit nachgewiesen wird, falls die berechnete Menge des zu der Brennstoffzelle (4) strömenden Wasserstoffgases größer als die durch Berechnung ermittelte, von der Brennstoffzelle (4) verstromte Menge Wasserstoffgas ist, wobei eine Temperatur des mindestens einen Behälters (6, 8, 10) gemessen, die Temperatur des Wasserstoffgases in dem mindestens einen Behälter (6, 8, 10) mit einer Temperatur der Luft in der Umgebung verglichen und über den Joule-Thomson-Effekt ein Durchsatz an Wasserstoffgas für den mindestens einen Behälter (6, 8, 10) bestimmt wird, und wobei für den Fall, dass der mindestens eine Behälter geschlossen ist und die Temperatur des geschlossenen Behälters (6, 8, 10) von der Temperatur der Luft der Umgebung abweicht, dies ein Indikator dafür ist, dass der mindestens eine Behälter (6, 8, 10) ein Leck aufweist, was ebenfalls durch den Joule-Thomson Effekt nachgewiesen werden kann.

2.  Verfahren nach Anspruch 1, bei dem für die Menge-Druck-Beziehung die Gleichung für das ideale Gas verwendet wird.

3.  Verfahren nach Anspruch 1, bei dem für die Menge-Druck-Beziehung eine Virialgleichung für Wasserstoffgas verwendet wird.

4.  Verfahren nach einem der voranstehenden Ansprüche, bei dem für die Menge-Druck-Beziehung eine Kennlinie verwendet wird.

5.  Verfahren nach einem der voranstehenden Ansprüche, bei dem für die Menge-Strom-Beziehung die Gleichung des Faraday-Gesetzes verwendet wird.

6.  Verfahren nach einem der voranstehenden Ansprüche, bei dem für die Menge-Strom-Beziehung eine Kennlinie verwendet wird.

7.  Verfahren nach einem der voranstehenden Ansprüche, bei dem jeweils mehrere Werte für den gemessenen Druck und den gemessenen Strom summiert und zur Berechnung der zu vergleichenden Mengen verwendet werden.

8.  Verfahren nach einem der voranstehenden Ansprüche, das für ein Brennstoffzellensystem (2) durchgeführt wird, das mehrere Behälter (6, 8, 10) zum Speichern von Wasserstoff aufweist, wobei sämtliche Behälter (6, 8, 10) über eine gemeinsame Leitung (26) mit der Brennstoffzelle (4) verbunden sind, an der der zumindest eine Drucksensor (36) angeordnet ist, mit dem der zum Berechnen der Menge an Wasserstoff vorgesehene Druck gemessen wird, wobei zum Überprüfen der Dichtheit nur einer der Behälter (6, 8, 10) geöffnet wird und alle anderen Behälter (6, 8, 10) geschlossen bleiben bzw. werden.

9.  Verfahren nach einem der voranstehenden Ansprüche, bei dem eine Menge Luft, die zu der Brennstoffzelle (4) strömt, bestimmt und mit zumindest einer bestimmten Menge Wasserstoffgas verglichen wird.

10. Verfahren nach Anspruch 9, bei dem ein Druck der Luft gemessen und daraus über eine Menge-Druck-Beziehung die Menge der Luft, die zu der Brennstoffzelle (4) strömt, berechnet wird.

11. Verfahren nach einem der voranstehenden Ansprüche, bei dem Temperaturen von Wasserstoffgas in mehreren Behältern (6, 8, 10) miteinander verglichen werden.

12. Anordnung, die eine Steuergeräteanordnung (72) aufweist und zum Überprüfen einer Dichtheit eines Brennstoffzellensystems (2) ausgebildet ist, das eine Brennstoffzelle (4) und mindestens einen Behälter (6, 8, 10) zum Speichern von Wasserstoffgas aufweist, wobei der mindestens eine Behälter (6, 8, 10) über eine Leitung (26), entlang der zumindest ein Drucksensor (36) angeordnet ist, mit der Brennstoffzelle (4) verbunden ist, wobei der zumindest eine Drucksensor (36) dazu ausgebildet ist, einen Druck des zu der Brennstoffzelle (4) strömenden Wasserstoffgases in dieser Leitung (26) zu messen, wobei die Steuergeräteanordnung (72) dazu ausgebildet ist, aus dem gemessenen Druck über eine Menge-Druck-Beziehung eine Menge des zu der Brennstoffzelle (4) strömenden Wasserstoffgases zu berechnen, wobei ein Strommessgerät (56) dazu ausgebildet ist, einen von der Brennstoffzelle (4) erzeugten Strom zu messen, wobei die Steuergeräteanordnung (72) dazu ausgebildet ist, aus dem gemessenen Strom über eine Menge-Strom-Beziehung eine Menge des von der Brennstoffzelle (4) verbrannten Wasserstoffgases zu berechnen, und wobei die Steuergeräteanordnung (72) dazu ausgebildet ist, die berechneten Mengen Wasserstoffgas miteinander zu vergleichen, wobei eine Undichtheit nachzuweisen ist, falls die berechnete Menge des zu der Brennstoffzelle (4) strömenden Wasserstoffgases größer als die durch Berechnung ermittelte, von der Brennstoffzelle (4) verstromte Menge Wasserstoffgas ist, wobei eine Temperatur des mindestens einen Behälters (6, 8, 10) zu messen, die Temperatur des Wasserstoffgases in dem mindestens einen Behälter (6, 8, 10) mit einer Temperatur der Luft in der Umgebung zu vergleichen, und über den Joule-Thomson-Effekt ein Durchsatz an Wasserstoffgas für den mindestens einen Behälter (6, 8, 10) zu bestimmen ist, und wobei für den Fall, dass der mindestens eine Behälter geschlossen ist und die Temperatur des geschlossenen Behälters (6, 8, 10) von der Temperatur der Luft der Umgebung abweicht, dies als Indikator dafür zu werten ist, dass der mindestens eine Behälter (6, 8, 10) ein Leck aufweist, was ebenfalls durch den Joule-Thomson Effekt nachgewiesen werden kann.

**Claims**

1. Method for checking the tightness of a fuel cell system (2) having a fuel cell (4) and at least one tank (6, 8, 10) for storing hydrogen gas, wherein the at least one tank (6, 8, 10) is connected to said fuel cell (4) via a line (26), along which at least one pressure sensor (36) is arranged, wherein to execute the method a pressure of the hydrogen gas flowing in said line (26) to the fuel cell (4) is measured using the at least one pressure sensor (36), and a quantity of the hydrogen gas flowing to said fuel cell (4) is calculated by means of a quantity-pressure relationship that describes a relationship of the pressure and the quantity of the hydrogen gas, and wherein a current generated by the fuel cell (4) is measured and a quantity of the hydrogen gas having been converted by the fuel cell (4) is calculated by means of a quantity-current relationship that describes a relationship of the current generated by the fuel cell (4) and the quantity of the hydrogen gas burnt, wherein the calculated quantities of hydrogen gas are compared with one another, wherein a leak is detected in the event that the calculated quantity of hydrogen gas flowing to the fuel cell (4) is greater than the quantity of hydrogen gas converted by the fuel cell ascertained by the calculation, wherein a temperature of the at least one tank (6, 8, 10) is measured, the temperature of the hydrogen gas in the at least one tank (6, 8, 10) is compared with a temperature of the surrounding air, and, using the Joule-Thomson effect, a throughput of hydrogen gas for the at least one tank (6, 8, 10) is determined, and wherein in the case where the at least one tank is closed and the temperature of the closed tank (6, 8, 10) is different from the temperature of the surrounding air, this is an indication that the at least one tank (6, 8, 10) has a leak, which can also be demonstrated by the Joule Thomson effect.

2. Method according to claim 1, in which the ideal gas equation is used for the quantity-pressure relationship.

3. Method according to claim 1, in which a virial expansion for hydrogen gas is used for the quantity-pressure relationship.

4. Method according to one of the preceding claims, in which a characteristic curve is used for the quantity-pressure relationship.

5. Method according to one of the preceding claims, in which Faraday's law is used for the quantity-current relationship.

6. Method according to one of the preceding claims, in which a characteristic curve is used for the quantity-current relationship.

7. Method according to one of the preceding claims, in which a plurality of values for the measured pressure and the measured current respectively are summed and used for calculation of the quantities to be compared.

8. Method according to one of the preceding claims, which is executed for a fuel cell system (2) having a plurality of tanks (6, 8, 10) for storing hydrogen, wherein all the tanks (6, 8, 10) are connected to said fuel cell (4) via a common line (26) on which the at least one pressure sensor (36) is arranged, on which pressure sensor the pressure that is to be used to calculate the quantity of hydrogen is measured, wherein to check the tightness only one of the tanks (6, 8, 10) is opened and all other tanks (6, 8, 10) are or remain closed.

9. Method according to one of the preceding claims, in which a quantity of air that flows to the fuel cell (4) is determined and compared with at least one determined quantity of hydrogen gas.

**EP 2 828 916 B1**

10. Method according to claim 9, in which a pressure of the air is measured and used in a quantity-pressure relationship to calculate the quantity of air flowing to the fuel cell (4).

11. Method according to one of the preceding claims, in which the temperatures of hydrogen gas in a plurality of tanks (6, 8, 10) are compared with one another.

12. Arrangement that comprises a control device arrangement (72) and is configured for checking the tightness of a fuel cell system (2), having a fuel cell (4) and at least one tank (6, 8, 10) for storing hydrogen gas, wherein the at least one tank (6, 8, 10) is connected to said fuel cell (4) via a line (26), along which at least one pressure sensor (36) is arranged, wherein the at least one pressure sensor (36) is configured to measure a pressure of the hydrogen gas flowing in said line (26) to the fuel cell (4), wherein the control device arrangement (72) is configured to calculate a quantity of the hydrogen gas flowing to said fuel cell (4) from the measured pressure by means of a quantity-pressure relationship, wherein a current measurement device (56) is configured to measure a current generated by the fuel cell (4), wherein the control device arrangement (72) is configured to calculate a quantity of hydrogen gas burnt by the fuel cell (4) from the measured current by means of a quantity-current relationship, and wherein the control device arrangement (72) is configured to compare with one another the calculated quantities of hydrogen gas, wherein a leak is detected in the event that the calculated quantity of hydrogen gas flowing to the fuel cell (4) is greater than the quantity of hydrogen gas converted by the fuel cell (4) ascertained by the calculation, wherein a temperature of the at least one tank (6, 8, 10) is to be measured, the temperature of the hydrogen gas in the at least one tank (6, 8, 10) is to be compared with a temperature of the surrounding air, and, using the Joule-Thomson effect, a throughput of hydrogen gas for the at least one tank (6, 8, 10) is to be determined, and wherein in the case where the at least one tank is closed and the temperature of the closed tank (6, 8, 10) is different from the temperature of the surrounding air, this is to be assessed as an indication that the at least one tank (6, 8, 10) has a leak, which can also be demonstrated by the Joule Thomson effect.

**Revendications**

1. Procédé de contrôle d'une étanchéité d'un système de pile à combustible (2) qui comporte une pile à combustible (4) et au moins un contenant (6, 8, 10) pour stocker de l'hydrogène gazeux, l'au moins un contenant (6, 8, 10) étant relié à la pile à combustible (4) par l'intermédiaire d'une conduite (26) le long de laquelle est agencé au moins un capteur de pression (36),
selon lequel, pour la mise en oeuvre du procédé, une pression de l'hydrogène gazeux affluant vers la pile à combustible (4) est mesurée dans cette conduite (26) avec l'au moins un capteur de pression (36) et une quantité d'hydrogène gazeux affluant vers la pile à combustible (4) est calculée par l'intermédiaire d'un rapport entre quantité et pression qui décrit une relation entre la pression et la quantité d'hydrogène gazeux
et selon lequel un courant produit par la pile à combustible (4) est mesuré et une quantité d'hydrogène gazeux transformé en courant par la pile à combustible (4) est calculée par l'intermédiaire d'un rapport entre quantité et courant qui décrit une relation entre le courant produit par la pile à combustible (4) et la quantité d'hydrogène gazeux brûlé, les quantités calculées d'hydrogène gazeux étant comparées entre elles, un défaut d'étanchéité étant avéré lorsque la quantité calculée de l'hydrogène gazeux affluant vers la pile à combustible (4) est supérieure à la quantité d'hydrogène gazeux transformée en courant par la pile à combustible (4) et déterminée par calcul, une température de l'au moins un contenant (6, 8, 10) étant mesurée, la température de l'hydrogène gazeux dans l'au moins un contenant (6, 8, 10) étant comparée à une température de l'air ambiant et un débit d'hydrogène gazeux pour l'au moins un contenant (6, 8, 10) étant déterminé par l'intermédiaire de l'effet Joule-Thomson et, dans le cas où l'au moins un contenant est fermé et la température du contenant fermé (6, 8, 10) est différente de la température de l'air ambiant, ce fait étant un indicateur que l'au moins un contenant (6, 8, 10) comporte une fuite, ce qui peut également être prouvé par l'effet Joule-Thomson.

2. Procédé selon la revendication 1, selon lequel l'équation pour le gaz idéal est utilisée pour le rapport entre quantité et pression.

3. Procédé selon la revendication 1, selon lequel une équation du viriel pour l'hydrogène gazeux est utilisée pour le rapport entre quantité et pression.

4. Procédé selon l'une des revendications précédentes, selon lequel une courbe caractéristique est utilisée pour le rapport entre quantité et pression.

**5.** Procédé selon l'une des revendications précédentes, selon lequel l'équation de la loi de Faraday est utilisée pour le rapport entre quantité et courant.

**6.** Procédé selon l'une des revendications précédentes, selon lequel une courbe caractéristique est utilisée pour le rapport entre quantité et courant.

**7.** Procédé selon l'une des revendications précédentes, selon lequel, à chaque fois, on cumule plusieurs valeurs pour la pression mesurée et pour le courant mesuré et on les utilise pour le calcul des quantités à comparer.

**8.** Procédé selon l'une des revendications précédentes, qui est mis en oeuvre pour un système de pile à combustible (2) qui comporte plusieurs contenants (6, 8, 10) pour stocker de l'hydrogène, tous les contenants (6, 8, 10) étant reliés à la pile à combustible (4) par l'intermédiaire d'une conduite commune (26) sur laquelle est agencé l'au moins un capteur de pression (36) avec lequel la pression prévue pour le calcul de la quantité d'hydrogène est mesurée, seul l'un des contenants (6, 8, 10) étant ouvert et tous les autres contenants (6, 8, 10) étant ou restant fermés pour le contrôle de l'étanchéité.

**9.** Procédé selon l'une des revendications précédentes, selon lequel une quantité d'air qui afflue vers la pile à combustible (4) est déterminée et est comparée à au moins une certaine quantité d'hydrogène gazeux.

**10.** Procédé selon la revendication 9, selon lequel une pression de l'air est mesurée et, à partir de là et par l'intermédiaire d'une relation entre quantité et pression, la quantité d'air qui afflue vers la pile à combustible (4) est calculée.

**11.** Procédé selon l'une des revendications précédentes, selon lequel des températures d'hydrogène gazeux dans plusieurs contenants (6, 8, 10) sont comparées entre elles.

**12.** Dispositif, qui comporte un agencement d'appareils de commande (72) et qui est conçu pour le contrôle d'une étanchéité d'un système de pile à combustible (2) qui comporte une pile à combustible (4) et au moins un contenant (6, 8, 10) pour stocker de l'hydrogène gazeux, l'au moins un contenant (6, 8, 10) étant relié à la pile à combustible (4) par l'intermédiaire d'une conduite (26) le long de laquelle au moins un capteur de pression (36) est agencé, l'au moins un capteur de pression (36) étant conçu pour mesurer une pression de l'hydrogène gazeux affluant vers la pile à combustible (4) dans cette conduite (26), l'agencement d'appareils de commande (72) étant conçu pour calculer à partir de la pression mesurée et par l'intermédiaire d'une relation entre quantité et pression une quantité d'hydrogène gazeux affluant vers la pile à combustible (4), un appareil de mesure de courant (56) étant conçu pour mesurer le courant produit par la pile à combustible (4), l'agencement d'appareils de commande (72) étant conçu pour calculer à partir du courant mesuré et par l'intermédiaire d'une relation entre quantité et courant une quantité d'hydrogène gazeux transformé en courant par la pile à combustible (4) et l'agencement d'appareils de commande (72) étant conçu pour comparer les quantité calculées d'hydrogène gazeux entre elles, un défaut d'étanchéité étant avéré lorsque la quantité calculée de l'hydrogène gazeux affluant vers la pile à combustible (4) est supérieure à la quantité d'hydrogène gazeux transformé en courant par la pile à combustible (4) et déterminée par calcul, une température de l'au moins un contenant (6, 8, 10) devant être mesurée, la température de l'hydrogène gazeux dans l'au moins un contenant (6, 8, 10) devant être comparée à une température de l'air ambiant et un débit d'hydrogène gazeux pour l'au moins un contenant (6, 8, 10) devant être déterminé par l'intermédiaire de l'effet Joule-Thomson et, dans le cas où l'au moins un contenant est fermé et la température du contenant fermé (6, 8, 10) est différente de la température de l'air ambiant, ce fait devant être évalué comme un indicateur que l'au moins un contenant (6, 8, 10) comporte une fuite, ce qui peut également être prouvé par l'effet Joule-Thomson.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006025125 A1
- DE 112005001818 T5
- DE 102007060712 A1


**In der Beschreibung aufgeführte Nicht-Patentliteratur**

- **ERIC W. LEMMON.** *Standardized Equation for Hydrogen Gas Densities for Fuel Consumption Applications*